# EUROPÄISCHE PATENTSCHRIFT

(11) **EP 1 024 312 B1**
(45) Veröffentlichungstag und Bekanntmachung des Hinweises auf die Patenterteilung: **13.07.2005**
(21) Anmeldenummer: 99125166.1
(22) Anmeldetag: 17.12.1999
(51) Int. Cl.: F02F 7/00, F16F 15/26, F02B 75/06

(54) **Hubkolben-Brennkraftmaschine**
Piston combustion engine
Moteur à pistons à combustion interne

(30) Priorität: 26.01.1999 DE 19902920
(43) Veröffentlichungstag der Anmeldung: 02.08.2000
(73) Patentinhaber: DaimlerChrysler AG, 70567 Stuttgart (DE)
(72) Erfinder: Rau, Erhard, 73235 Weilheim (DE)

(56) Entgegenhaltungen:
- EP-A- 0 851 132
- WO-A-95/28573
- DE-A- 4 134 399
- US-A- 4 509 378
- US-A- 4 926 810

## Beschreibung

Die Erfindung bezieht sich auf eine Hubkolben-Brennkraftmaschine mit einer in Lagern aufgenommenen Kurbelwelle und einem Massenausgleich erster Ordnung und einem Lanchesterausgleich, zu der zwei in den Lagern aufgenommene Wellen gehören, die in einem Kurbelgehäuse aufgenommen sind, wobei die Lager der Kurbelwelle und/oder die Lager der Lanchester-Wellen zumindest aus einem Lageroberteil und einem Lagerunterteil gebildet sind.

Es ist bereits eine Antriebsvorrichtung für ein Kraftfahrzeug mit einem Motor, einer Kurbelwelle und einem Getriebe bekannt (DE 41 34 399 A1), die eine in Lagern aufgenommene Kurbelwelle und einen Massenausgleich erster Ordnung sowie einen Massenausgleich zweiter Ordnung zeigt, zu der mehrere in Lagern aufgenommene Wellen gehören, die in einem Kurbelgehäuse aufgenommen sind. Das Lagergehäuse des Massenausgleichs zweiter Ordnung (Lanchester-Ausgleich) ist über eine Flanschverbindung lösbar mit dem Kurbelgehäuse der Kurbelwelle verbunden. Die getrennte Bauweise des untergehängten Lanchester-Gehäuses führt zu einem erheblichen Arbeitsaufwand bei der Herstellung der Lager der Kurbelwelle und der Lager des Lanchester-Massenausgleichs. Zudem ist für die anschließende Bearbeitung der Lager-Flanschflächen ein großer fertigungstechnischer Aufwand notwendig. Die erforderlichen Toleranzen hinsichtlich des Lagerspiels der einzelnen Lager sowie der Lagerposition sind nur unter mit hohem Bearbeitungsaufwand zu erreichen.

Aus der Druckschrift US 4,926,810 ist eine Hubkolben-Brennkraftmaschine mit einer in Lagern aufgenommenen Kurbelwelle bekannt, die einen desmodromischen Massenausgleich aufweist. Der Massenausgleich besteht aus Massenausgleichsgewichten, die jeweils mit einem Kurbelwellenlager verbunden sind.

Die Druckschrift DE 196 47 465 A1 zeigt ein Gußgehäuse mit einer Lageranordnung für Hubkolbenmaschinen. Das in Querwänden fluchtend angeordnete, Lagerbohrungen aufweisende Gußgehäuse umfaßt in Lagerbohrungsmittelebenen von den Lagerstühlen bruchgetrennte Lagerdeckel, wobei das über Abschnitte der Querwände mit diametralen Außenwandbereichen einstückig verbundene, Lagerdeckel aufweisende Gußgehäuse einstückig hergestellt ist und diese Außenwandbereiche und ggf. angrenzende lagerdeckelseitige Querwandabschnitte vom übrigen Gußgehäuse vor dem Lagerdeckel-Bruchtrennen gesondert getrennt sind. Der Lagerrahmen, der die Lagerdeckel umfaßt, ist als abgetrenntes Gehäuseteil mit dem übrigen Gehäuseteil wiederverbindbar ausgebildet. Die Ausbildung von Kurbelwellenlager und Lanchester-Lager als Baueinheit, insbesondere die einteilige Herstellung in Verbindung mit dem anschließenden Crackvorgang, ist nicht vorgesehen. Der Mangel einer vorteilhaften Anordnung der Kurbelwellenlager in Verbindung mit den Lanchester-Lagern sowie der dadurch erforderliche Aufwand der Flanschflächenweiterbearbeitung bzw. der Toleranzeinhaltung bleibt somit bestehen.

Eine weitere Druckschrift 195 35 497 A1 zeigt ebenfalls geteilte Gleitlager, insbesondere Hauptlager, für eine Kurbelwelle in einer Hubkolben-Brennkraftmaschine mit einem Lagerstuhl und einem Lagerdeckel mit einander anliegenden Teilungsflächen, wobei Lagerstuhl und Lagerdeckel mittels Schrauben miteinander verspannt sind. Zumindest eine Teilungsfläche weist hierbei eine erhöhte Rauhigkeit auf, wobei die Oberflächenrauhigkeit der Teilungsfläche durch eine grobe mechanische Endbearbeitung der Teilungsfläche erzeugt ist. Die bauliche Einheit von Kurbelwellenlager und Lanchester-Lager wird hier auch nicht offenbart. Zudem ist bei der aufgezeigten Ausbildung der Flanschflächen eine Endbearbeitung bzw. Weiterbearbeitung der Flanschflächen vorgesehen, die wiederum einen Bearbeitungsaufwand notwendig macht.

Demgemäß besteht die Erfindungsaufgabe darin, eine vorteilhafte und präzise Anordnung der Kurbelwellenlager und der Lanchester-Lager mit geringem Fertigungsaufwand zu gewährleisten, ohne dass eine Nachbearbeitung der Flanschflächen erforderlich ist.

Gelöst wird die Aufgabe erfindungsgemäß dadurch, dass zumindest ein Lagerunterteil des Lagers der Kurbelwelle mit mindestens einem Lager der Lanchester-Welle einteilig verbunden ist oder eine Baueinheit bildet, wobei zumindest die gegeneinander anliegenden Flanschoberflächen der Lagerober- und Lagerunterteile der Kurbelwelle und der Lanchester-Welle eine durch Cracken gebildete Bruchoberfläche aufweisen. Hierdurch wird erreicht, dass nicht nur das jeweilige Lagerober- und -unterteil gecrackt ist, sondern auch die fertigungstechnische Einheit von Kurbelwellenlager und Lanchester-Lager. Die separate Anordnung des Lanchester-Lagers über eine noch zusätzlich zu bearbeitende Flanschfläche wird vermieden. Die gecrackte Flanschoberfläche gewährleistet hierbei eine sehr gute Fixierung zwischen den zu verbindenden Lagern.

Ferner ist es vorteilhaft, dass, das Lageroberteil der Lanchester-Welle, mit dem das Lagerunterteil lösbar verbunden ist, ebenfalls eine durch Cracken gebildete Flanschoberfläche bzw. erste Crackebene aufweist und dass das Lageroberteil der Lanchester-Welle mit seiner gecrackten Flanschoberfläche gegen die gecrackte Flanschoberfläche des Lagerunterteils der Kurbelwelle anliegt. Unebenheiten bzw. die aufgeraute Flanschoberfläche der zusammenzufügenden Lagerteile ermöglichen eine sehr genaue Justierung und damit einen exakten Sitz des zu montierenden Lagerteils an dem anderen Lagerteil.

Eine zusätzliche Möglichkeit ist gemäß einer Weiterbildung der erfindungsgemäßen Vorrichtung, dass die durch Cracken gebildete Flanschoberfläche im Bereich ihrer Bruchstelle für den Crackvorgang eine kleine Einkerbung aufweist. Die Einkerbung bzw. Einritzung kann mittels eines Lasers vorgenommen werden und stellt sicher, dass an der Stelle der Einritzung beim Bruchvorgang, d. h. beim Abbrechen des Lagerunterteils vom Lageroberteil, sich genau an dieser Stelle eine Crackfläche bildet, die dann der Flanschoberfläche des Lagers entspricht. Fügt man nach der Montage der Wellen die beiden zusammengehörenden Lagerteile wieder zusammen, so lassen sich diese auf einfache Weise justieren, da die beiden zusammengehörigen Bruchoberflächen bzw. Crackflächen wieder genau zusammen kommen. Hierdurch nimmt das Lager wieder die gleiche Position wie vor dem Crackvorgang ein. Man erhält also einen sehr exakten Sitz des anzufügenden Lagerunterteils am Lageroberteil.

In weiterer Ausgestaltung der Erfindung ist es vorteilhaft, dass die durch Cracken gebildete Flanschoberfläche nach dem Cracken unbearbeitet bleibt und somit der Fertigungsaufwand um einen erheblichen Teil reduziert ist.

Gemäß einer bevorzugten Ausführungsform der erfindungsgemäßen Lösung ist schließlich vorgesehen, dass die zweite Crackebene oder Trennfläche zwischen dem Lageroberteil und dem Lagerunterteil der Lanchester-Welle für den Massenausgleich zweiter Ordnung gebildet ist.

Von besonderer Bedeutung ist für die vorliegende Erfindung, dass die zweite Crackebene der Flanschoberfläche des Lageroberteils und des Lagerunterteils entspricht, die in etwa auf der gleichen Ebene liegt wie die Trennfläche zwischen einer Kurbelwanne und dem Kurbelgehäuse.

Im Zusammenhang mit der erfindungsgemäßen Ausbildung und Anordnung ist es von Vorteil, dass die Crackoberfläche eine Rautiefe zwischen 0,01 mm und 0,1 mm aufweist.

Vorteilhaft ist es ferner, dass das einteilige Bauteil mit dem Lagerunterteil des Lagers der Kurbelwelle einerseits an ein Lageroberteil der Kurbelwelle, andererseits an ein Lagerunterteil der Lanchester-Welle angeschlossen ist. Hierdurch kann die Montagezeit verringert und die Bearbeitungszeit des Lagerteils verkürzt werden, da das Werkstück nur wenige Male umgespannt zu werden braucht.

Außerdem ist es vorteilhaft, dass das einteilige Bauteil der Kurbelwelle neben den beiden Lageroberteilen für die beiden Lanchester-Wellen ein weiteres Lagerunterteil für eine dritte Welle des Lanchesters aufweist.

Weitere Vorteile und Einzelheiten der Erfindung sind in den Patentansprüchen und in der Beschreibung erläutert und in den Figuren dargestellt.

Es zeigt:
- Figur 1: einen Längsschnitt durch eine Hubkolbenbrennkraftmaschine mit einer in Lagern aufgenommenen Kurbelwelle und einem Lanchester-Ausgleich,
- Figur 2: ein zweites Ausführungsbeispiel der Hubkolben-Brennkraftmaschine mit einem Massenausgleich zweiter Ordnung, wobei der Massenausgleich zweiter Ordnung drei Wellen aufweist,
- Figur 3: eine perspektivische Darstellung der einzelnen Lagerunterteile zur Aufnahme der Kurbelwelle mit dem zwei Wellen aufweisenden Massenausgleich zweiter Ordnung,
- Figur 4: eine Schnittdarstellung eines Teils des Kurbelgehäuses mit dem einteiligen Lageroberteil und Lagerunterteil,
- Figur 5: ein weiteres Ausführungsbeispiel für die Ausbildung der Lager der Kurbelwelle und der Lanchester-Welle mit zwei Crackebenen für einen Vierzylindermotor,
- Figur 6: ein Bauteil mit integriertem Lagerunterteil für die Kurbelwelle und einem Lageroberteil für eine Lanchester-Welle und einer Crackebene.

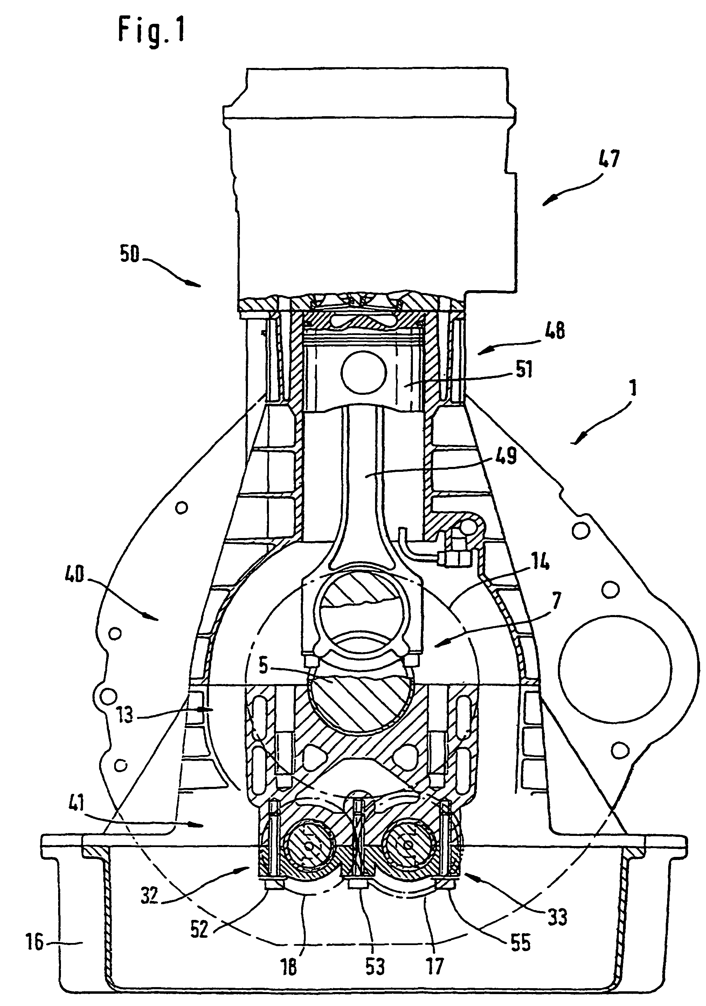

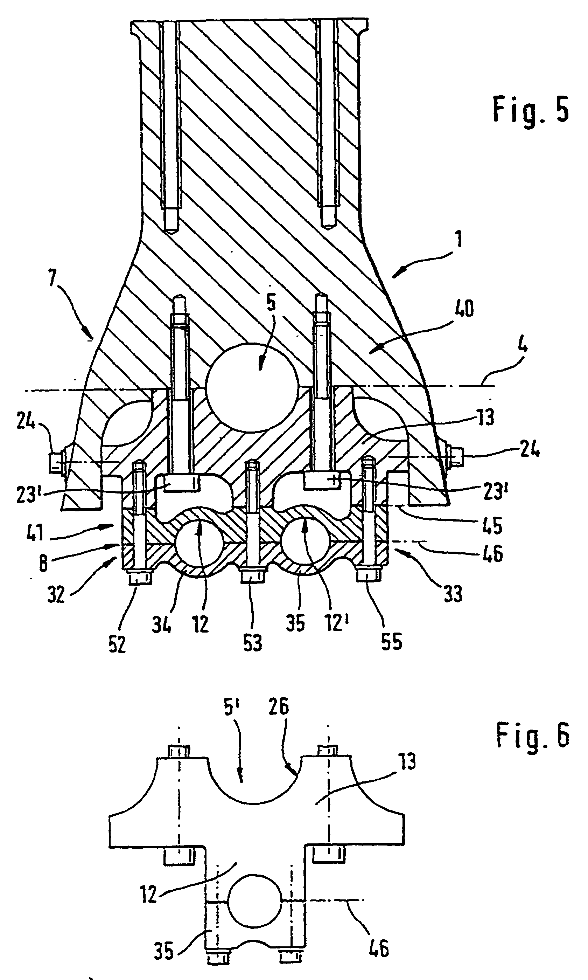

In der Zeichnung ist mit 50 eine Hubkolben-Brennkraftmaschine bezeichnet, die beispielsweise als Drei- oder Vier-Zylindermotor ausgebildet sein kann und ein Kurbelgehäuse 1 umfaßt, das in Fig. 1 und 5 einen Zylinderblock 48 zeigt, auf dem ein Zylinderkopf 47 mittels Zugankerschrauben 23 befestigt ist. In dem Kurbelgehäuse 1 befindet sich eine Kurbelstange 49, die an ihrem oberen Ende mit einem Kolben 51 verbunden ist und mit ihrem anderen Ende an eine Kurbelwelle 5 angeschlossen ist.

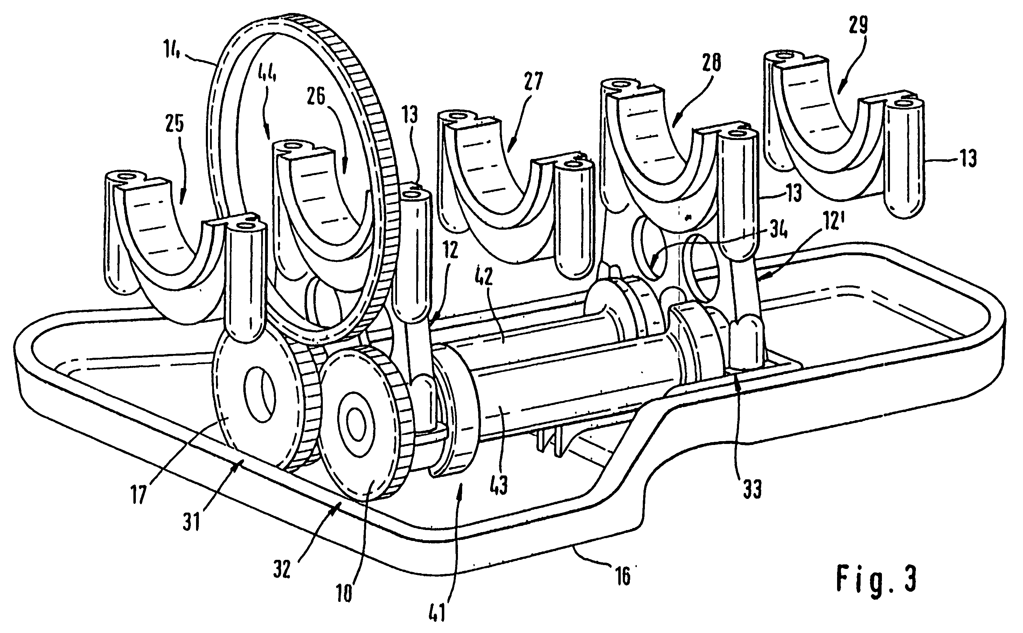

In dem Kurbelgehäuse 1 befindet sich ein der Kurbelwelle 5 zugeordneter Massenausgleich 40 erster Ordnung und ein Massenausgleich 41 zweiter Ordnung (Lanchester), die insbesondere in Fig. 3 veranschaulicht sind.

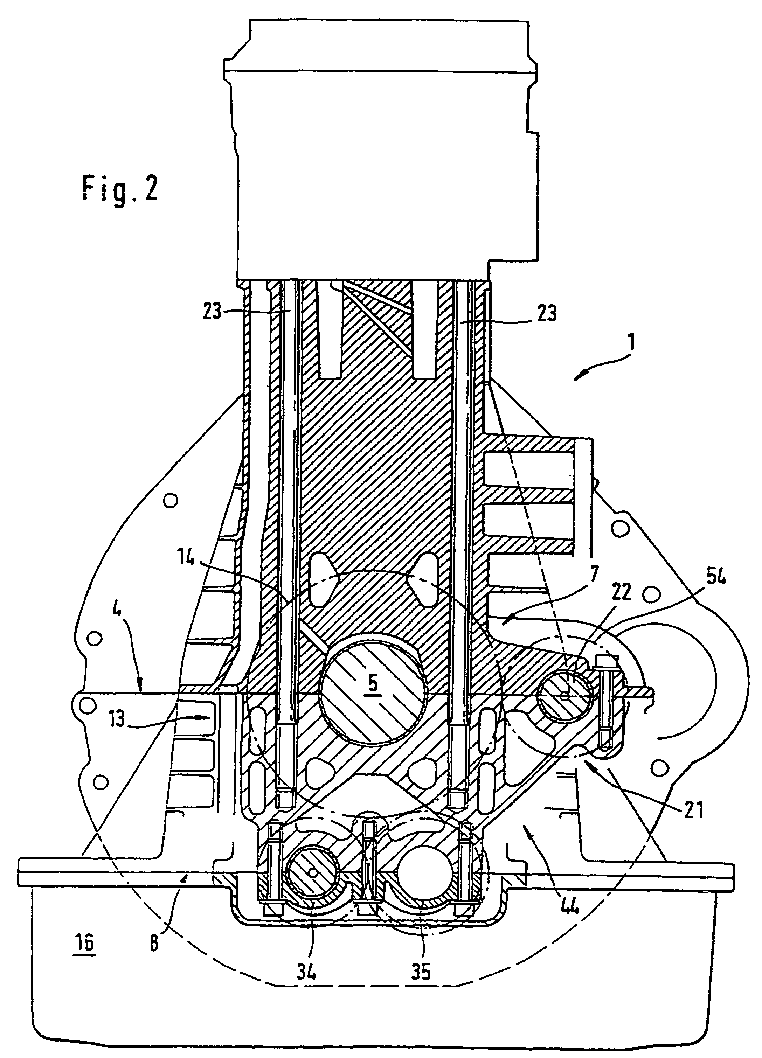

In Fig. 3 ist die Kurbelwelle 5 weggelassen und nur deren Lager 25, 26, 27, 28 und 29 dargestellt. Die Lager 25 bis 29 sind über in Fig. 1, 2 dargestellte Schrauben bzw. die Zugankerschrauben 23 mit Lageroberteilen 7 und dem Zylinderkopf 47 (vgl. Fig. 1) bzw. mit Teilen des Kurbelgehäuses 1 lösbar verbunden.

Die einzelnen Lager 25 bis 29 werden also durch je ein Lageroberteil 7 und durch je ein Lagerunterteil 13 zur Aufnahme der Kurbelwelle 5 gebildet.

Die Lageroberteile 7 bzw. Lagerdeckel können aus einem ähnlichen Werkstoff mit ähnlichem Wärmeausdehnungskoeffizienten wie die Kurbelwelle 5 ausgebildet sein. Das Lagerunterteil 13 bzw. der Lagerstuhl der Kurbelwelle 5 kann ebenfalls aus einem ähnlichen Werkstoff mit gleichem Wärmeausdehnungskoeffizienten wie die Kurbelwelle 5 gebildet sein. Beispielsweise ist es möglich, hierfür GGG, Sinter-Alu oder andere Verbundwerkstoffe zu wählen. Die in Fig. 3 perspektivisch dargestellten Lagerunterteile 26 und 28 sind einteilig mit einem Lageroberteil 12 bzw. 12' des Massenausgleichs zweiter Ordnung verbunden. Das Lagerunterteil 26 bzw. 28 und das Lageroberteil 12, 12' bilden also eine Baueinheit 44. Die aus den Teilen 26 und 12 gebildete Baueinheit 44 ist ebenfalls über die in Fig. 1 bzw. 2 dargestellten Zugankerschrauben 23 mit dem Zylinderkopf 47 lösbar verbunden.

Der Massenausgleich zweiter Ordnung bzw. der Lanchester 41 weist zwei parallel zueinander verlaufende Wellen 42 und 43 auf, die in Lagerschalen 34 und 35 drehbar aufgenommen sind, die über Schrauben 52, 53, 55 mit dem Lagerunterteil 13 lösbar verbunden sind.

Der Antrieb der Lanchester-Wellen 42 und 43 erfolgt gemäß Fig. 3 über ein Zahnradgetriebe. Hierzu gehört ein auf der Kurbelwelle 5 angeordnetes Antriebsrad 14, das in Eingriff mit einem ersten Antriebsrad 17 und einem getriebenen Zahnrad 18 des Massenausgleichs zweiter Ordnung steht. Die Lanchester-Wellen 42 und 43 liegen etwas oberhalb einer Kurbelwanne 16. Das Antriebsrad 14 ist auf der Kurbelwelle 5 drehfest angeordnet, während das Antriebsrad 17 auf der Lanchester-Welle 42 und das getriebene Zahnrad 18 auf der Lanchester-Welle 43 drehfest vorgesehen ist. Die beiden Lanchester-Wellen 42 und 43 verlaufen parallel zueinander auf einer horizontal verlaufenden Querebene 8.

Nach einem weiteren Ausführungsbeispiel gemäß Fig. 2 kann der Massenausgleich zweiter Ordnung auch aus mindestens drei Wellen 42, 43, 22 bestehen, wobei das Abtriebsrad 14 über ein auf der dritten Welle 22 angeordnetes Zahnrad 54 direkt antreibt. Die dritte Welle 22 liegt in etwa auf der gleichen Höhe wie die Lager 25 bis 29 der Kurbelwelle 5, also auf einer horizontalen Querebene 4.

Das Antriebsrad 14 steht ferner, wie bereits erwähnt, mit dem Antriebsrad 17 der Welle 42 in Antriebsverbindung, die wiederum die Welle 43 über das Antriebsrad 18 antreibt.

Ein Lagerunterteil 21 der dritten Welle 22 bildet mit den entsprechenden Lageroberteilen 12 der beiden parallel zueinander verlaufenden Wellen 42 und 43 ebenfalls ein einteiliges Bauteil 44, das über die Zugankerschrauben 23 gemäß Fig. 1, 2 mit dem Lageroberteil 7 und auch mit dem Zylinderkopf 47 lösbar verbunden ist.

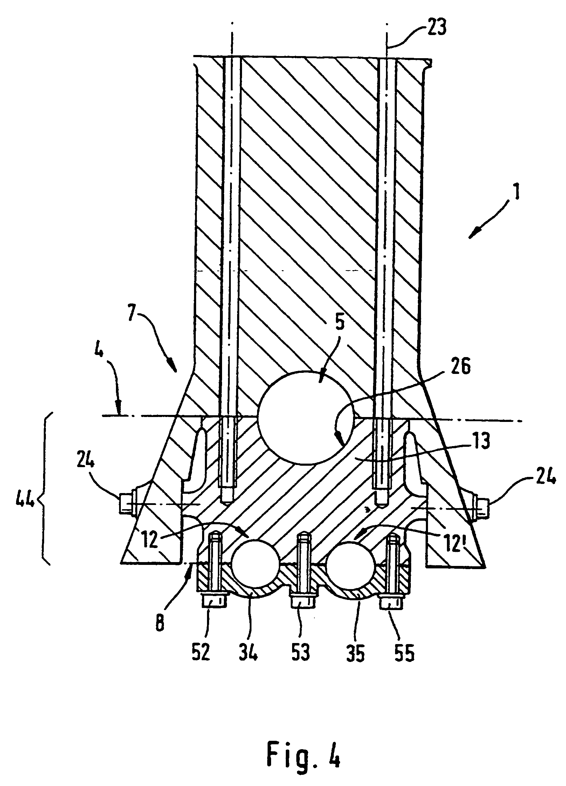

Das einteilige Bauteil 44 der Lanchester-Wellen 42, 43 und 22 kann gemäß Fig. 4 über Querverschraubungselemente 24 mit dem Unterteil des Kurbelgehäuses 1 zusätzlich lösbar verbunden werden.

Vorteilhaft ist es, wenn die gegeneinander anliegenden Flanschoberflächen des Lagerunterteils 13 und des Lagerunterteils 12, 12' eine durch Cracken gebildete Flanschoberfläche 45 bilden, die auch als erste Crackebene (I) bezeichnet wird (Fig. 5).

Eine zweite Crackebene 46 (II) verläuft zwischen den Flanschoberflächen des Lageroberteils 12, 12' und dem Lagerunterteil 34, 35 der Lanchester-Welle 42, 43.

Hierdurch wird erreicht, dass die durch Cracken gebildeten Flanschflächen bzw. Flanschoberflächen 45 des Lageroberteils 12, 12' und des Lagerunterteils 13 nach diesem Arbeitsvorgang nicht mehr nachbearbeitet werden müssen. Die gecrackte Flanschoberfläche ermöglicht eine sehr gute Fixierung zwischen den zu verbindenden Lagerteilen.

Für den Crackvorgang bzw. den Trennvorgang des Lagerunterteils 13 der Kurbelwelle 5 vom Lageroberteil 12, 12' im Bereich der Stelle, an der das Lagerunterteil weggebrochen werden soll, wird eine Einkerbung bzw. Einritzung mittels eines Lasers oder auch durch mechanische Bearbeitung vorgenommen. Hierdurch wird sichergestellt, dass an der Stelle der Einritzung bzw. Einkerbung beim Bruchvorgang, d. h. beim Abbrechen des Lageroberteils, 12, 12' vom Lagerunterteil 13 bzw. beim Abbrechen des Lagerunterteils 34, 35 vom Lageroberteil 12, 12' sich jeweils genau an dieser Stelle eine Crackfläche bildet, die dann der Flanschoberfläche 45 bzw. 46 des oberen Lagers bzw. Lagerdeckels 12, 12' und des Lagerunterteils 13, 34, 35 entspricht.

Fügt man nach dem Crackvorgang die zusammengehörenden Lagerteile wieder zusammen, so lassen sich diese auf einfache Weise justieren, da die beiden zusammengehörigen Bruchoberflächen bzw. Crackflächen wieder genau an ihrer Trennstelle passgenau zusammen kommen. Hierdurch nimmt das Lager wieder die gleiche Position wie vor dem Crackvorgang ein. Man erhält also hierdurch ohne Nachjustierung einen sehr exakten Sitz des anzufügenden Lagerunterteils 13, 34, 35 am Lageroberteil 12, 12'.

Bei der Vierzylinder-Motorversion gemäß Fig. 5 ist das Lagerunterteil 13 der Kurbelwelle 5 über kurze Schrauben 23' mit dem Kurbelgehäuse 1 lösbar verbunden. An dem Lagerunterteil 13 sind über die Schrauben 52, 53, das Lageroberteil 12, 12' und das Lagerunterteil 34, 35 der Lanchester-Wellen 42, 43 lösbar angeschlossen.

Zwischen dem Lagerunterteil 13 der Kurbelwelle 5 und dem Lageroberteil 12, 12' der Lanchester-Wellen 42, 43 befindet sich die zweite, bereits erwähnte Crackebene 46.

In einem weiteren Ausführungsbeispiel ist ein VierZylindermotor (Fig. 2, 3) im Schnitt dargestellt. Aus dieser Zeichnung ist ersichtlich, dass die Kurbelwelle 5 und die fünf hintereinander liegenden Lager 25 bis 29 über die einfachen Schrauben 23 mit je einem Zylinderkopf 47 lösbar verbunden sind und bei diesem Ausführungsbeispiel nur das zweite und vierte Lagerunterteil 13 mit dem Lageroberteil 12 bzw. 12' die Baueinheit 44 bilden. Ferner kann nach diesem Beispiel die Welle 43 den Massenausgleich zweiter Ordnung (Lanchester) aufweisen, während die erste Welle 42 als glatte Welle ohne Massenausgleich ausgebildet ist.

Ferner ist es möglich, dass das Antriebsrad 14 als Kettenrad ausgebildet ist und über ein nicht dargestelltes Zugmittel mit einem der Antriebsräder der Welle 42 in Antriebsverbindung steht.

Die Trennlinie 8 zwischen der Kurbelwanne 16 und dem Kurbelgehäuse 1 liegt in etwa auf der gleichen horizontalen Querebene wie die durch die beiden Wellen 42, 43 verlaufende Querebene. Die Trennlinie 8 zwischen den Lageroberteilen 12, 12' des einteiligen Bauteils 44 und den Lagerunterteilen 34, 35 des Lanchesters liegen auf der zweiten Crackebene 46. Die Crackebene 46 kann auch etwas oberhalb oder unterhalb der Trennlinie 8 zwischen der Kurbelwanne 16 und dem Kurbelgehäuse 1 liegen.

Vorteilhaft ist es ferner, wenn jede Trennstelle zwischen den einzelnen Lagern als Crackfläche ausgebildet ist.

## Patentansprüche

1. Hubkolben-Brennkraftmaschine (50) mit einer in Lagern (25 bis 29) aufgenommenen Kurbelwelle (5) und einem Massenausgleich (40) erster Ordnung und einem Lanchesterausgleich (41), zu der zwei in den Lagern (26 und 28) aufgenommene Wellen (42, 43) gehören, die in einem Kurbelgehäuse (1) aufgenommen sind, wobei die Lager (25 bis 29) der Kurbelwelle (5) und die Lager der Lanchester-Wellen (42, 43) zumindest aus einem Lageroberteil (12, 12') und einem Lagerunterteil (13 bzw. 34, 35) gebildet sind, wobei zumindest ein Lagerunterteil (13) des Lagers (26, 28) der Kurbelwelle (5) mit mindestens einem Lageroberteil (12, 12') der Lanchester-Welle (42, 43) eine Baueinheit bildet, die mit dem Zylinderblock (47) lösbar verbunden ist, wobei zwischen dem Lageroberteil (12, 12') und dem Lagerunterteil (34, 35) der Lanchester-Wellen (42, 43) eine durch Cracken gebildete Flanschoberfläche (46) bzw. Crackebene (II) verläuft.

2. Vorrichtung nach Anspruch 1,
**dadurch gekennzeichnet,**
**dass** zwischen dem Lagerunterteil (13) der Kurbelwelle (5) und dem Lageroberteil (12, 12') der Lanchester-Wellen (34, 35) eine weitere, durch Cracken gebildete Flanschoberfläche (45) bzw. Crackebene (I) verlauft.

3. Vorrichtung nach Anspruch 1 oder 2,
**dadurch gekennzeichnet,**
**dass** die durch Cracken gebildete Flanschoberfläche (45, 46) im Bereich ihrer Bruchstelle für den Crackvorgang eine kleine Einkerbung aufweist.

4. Vorrichtung nach Anspruch 1 bis 3,
**dadurch gekennzeichnet,**
**dass** die durch Cracken gebildete Flanschoberfläche (45, 46) nach dem Cracken unbearbeitet bleibt.

5. Vorrichtung nach einem der vorhergehenden Ansprüche,
**dadurch gekennzeichnet,**
**dass** die zweite Crackebene (46) der Flanschoberfläche des Lageroberteils (12, 12') und des Lagerunterteils (34, 35) entspricht, die in etwa auf der gleichen Ebene liegt wie die Trennfläche (8) zwischen einer Kurbelwanne (16) und dem Kurbelgehäuse (1).

6. Vorrichtung nach einem der vorhergehenden Ansprüche,
**dadurch gekennzeichnet,**
**dass** die Crackoberfläche eine Rautiefe zwischen 0,01 mm und 0,1 mm aufweist.

7. Vorrichtung nach einem der vorhergehenden Ansprüche,
**dadurch gekennzeichnet,**
**dass** die Baueinheit (44) einerseits an ein Lageroberteil (7) der Kurbelwelle (5), andererseits an ein Lagerunterteil (34, 35) der Lanchester-Welle (42 bzw. 43) angeschlossen ist.

8. Vorrichtung nach Anspruch 7,
**dadurch gekennzeichnet,**
**dass** die Baueinheit (44) der Kurbelwelle (5) einteilig ausgebildet ist und neben den beiden Lageroberteilen (12, 12') für die beiden Lanchester-Wellen (42, 43) ein weiteres Lagerunterteil (21) für eine dritte Welle (22) des Lanchesters aufweist.

## Claims

1. A reciprocating internal combustion engine (50) having a crankshaft (5) mounted in bearings (25 to 29), a first-order balancing mass (40) and a Lanchester mass (41) to which belong two shafts (42, 43) which are mounted in the bearings (26 and 28) and housed in a crankcase (1), the bearings (25 to 29) of the crankshaft (5) and the bearings of the Lanchester shafts (42, 43) consisting of at least one upper bearing part (12, 12') and one lower bearing part (13/34, 35), at least one lower part (13) of the bearing (26, 28) of the crankshaft (5) forming an assembly with at least one upper bearing part (12, 12') of the Lanchester shaft (42, 43) which is connected to the cylinder block (47) in such a manner that it is detachable, a flange surface (46) or cracking plane (II) formed by cracking running between the upper bearing part (12, 12') and the lower bearing part (34, 35) of the Lanchester shafts (42, 43).

2. A device in accordance with claim 1,
**characterised in that**
a further flange surface (45) or cracking plane (I) formed by cracking runs between the lower bearing part (13) of the crankshaft (5) and the upper bearing part (12, 12') of the Lanchester shafts (34, 35).

3. A device in accordance with claim 1 or 2,
**characterised in that**
the flange surface (45, 46) formed by cracking has a small notch for the cracking process in the area of its fracture point

4. A device in accordance with claims 1 to 3,
**characterised in that**
the flange surface (45, 46) formed by cracking remains unmachined after cracking.

5. A device in accordance with one of the preceding claims,
**characterised in that**
the second cracking plane (46) corresponds to the flange surface of the upper bearing part (12, 12') and the lower bearing part (34, 35) which lies in roughly the same plane as the parting face (8) between a crankcase bottom (16) and the crankcase (1)

6. A device in accordance with one of the preceding claims,
**characterised in that**
the cracking surface has a surface roughness of between 0.01 mm and 0 1 mm

7. A device in accordance with one of the preceding claims,
**characterised in that**
the assembly (44) is connected on one hand to an upper bearing part (7) of the crankshaft (5) and on the other to a lower bearing part (34, 35) of the Lanchester shaft (42/43)

8. A device in accordance with claim 7,
**characterised in that**
the assembly (44) comprising the crankshaft (5) is designed in one piece and in addition to the two upper bearing parts (12, 12') for the two Lanchester shafts (42, 43) has a further lower bearing part (21) for a third Lanchester shaft (22).

## Revendications

1. Moteur à pistons alternatifs (50) à combustion interne comportant un vilebrequin (5) reçu dans des paliers (25 à 29) et un équilibrage des masses (40) de premier ordre et un équilibrage dit de Lanchester (41) auquel appartiennent deux arbres (42, 43) reçus dans les paliers (26 et 28) et logés dans un carter de vilebrequin (1), les paliers (25 à 29) du vilebrequin (5) et les paliers des arbres de Lanchester (42, 43) étant formés au moins par une partie de palier supérieure (12, 12') et par une partie de palier inférieure (13 ou 34, 35), au moins une partie de palier inférieure (13) du palier (26, 28) du vilebrequin (5) formant, conjointement avec au moins une partie de palier supérieure (12, 12') de l'arbre de Lanchester (42, 43), une unité structurelle qui est reliée de façon détachable au bloc de cylindres (47), une surface de bride (46) formée par brisure ou un plan de brisure (II) s'étendant entre la partie de palier supérieure (12, 12') et la partie de palier inférieure (34, 35) des arbres de Lanchester (42, 43).

2. Dispositif selon la revendication 1, **caractérisé en ce qu'**une autre surface de bride (45) formée par brisure ou un plan de brisure (I) s'étend entre la partie de palier inférieure (13) du vilebrequin (5) et la partie de palier supérieure (12, 12') des arbres de Lanchester (34, 35).

3. Dispositif selon l'une ou l'autre des revendications 1 et 2, **caractérisé en ce que** la surface de bride (45, 46) formée par brisure présente dans la zone de son emplacement de rupture une petite entaille pour l'opération de brisure.

4. Dispositif selon les revendications 1 et 3, **caractérisé en ce que** la surface de bride (45, 46) formée par brisure reste non-travaillée après la brisure.

5. Dispositif selon l'une des revendications précédentes, **caractérisé en ce que** le deuxième plan de brisure (46) correspond à la surface de bride de la partie de palier supérieure (12, 12') et de la partie de palier inférieure (34, 35), qui se trouve approximativement sur le même plan que la surface de séparation (8) entre une cuve de vilebrequin (16) et le carter de vilebrequin (1).

6. Dispositif selon l'une des revendications précédentes, **caractérisé en ce que** la surface de brisure présente une rugosité comprise entre 0,01 mm et 0,1 mm.

7. Dispositif selon l'une des revendications précédentes, **caractérisé en ce que** l'unité structurelle (44) est raccordée d'une part à une partie de palier supérieure (7) du vilebrequin (5) et d'autre part à une partie de palier inférieure (34, 35) de l'arbre de Lanchester (42 ou 43).

8. Dispositif selon la revendication 7, **caractérisé en ce que** l'unité structurelle (44) du vilebrequin (5) est réalisée d'un seul tenant et comprend, outre les deux parties de palier supérieures (12, 12') pour les deux arbres de Lanchester (42, 43), une autre partie de palier inférieure (21) pour un troisième arbre (22) de Lanchester.
